# EUROPÄISCHE PATENTANMELDUNG

(11) **EP 2 034 574 A2**
(43) Veröffentlichungstag der Anmeldung: **11.03.2009**
(21) Anmeldenummer: 08015357.0
(22) Anmeldetag: 29.08.2008
(51) Int. Cl.: H02G 1/04

(54) **Sicherungselement, Vorrichtung und Verfahren zur Sicherung von Freileitungen**

(30) Priorität: 04.09.2007 DE 102007041762
(71) Anmelder: LTB Leitungsbau GmbH, 01139 Dresden (DE)
(72) Erfinder: Bartsch, Harry, 01665 Klipphausen (DE); Ring, Hartmut, 06116 Halle (DE); Hennersdorf, Jörg, 01662 Meißen (DE)
(74) Vertreter: Miller, Toivo

(57) **Zusammenfassung**

Die Erfindung betrifft ein Sicherungselement (2) mit einem Halterahmen (4) mit wenigstens einer Laufrolle (6) zur Aufnahme wenigstens einer Freileitung (32), wobei wenigstens zwei Seilführungsmittel (10) vorgesehen sind, durch welche das Sicherungselement (2) mit wenigstens jeweils einem Halteseil (12) verbindbar und/oder führbar ist. Weiterhin umfasst die Erfindung eine Vorrichtung zur Sicherung von Freileitungen, insbesondere von Hochspannungsfreileitungen mit wenigstens einem Sicherungselement (2) der vorgenannten Art, sowie wenigstens zwei elektrisch isolierenden Halteseile (12), wobei die wenigstens zwei Halteseile (12) zur Führung und/oder Halterung des jeweiligen Sicherungselementes (2) vorgesehen sind. Weiterhin umfasst wird ebenfalls noch ein entsprechendes Verfahren zur Sicherung von Freileitungen unter Verwendung wenigstens einer vorgenannten Vorrichtung, wobei wenigstens ein Sicherungselement (2) mittels wenigstens zwei als Halteseile (12) ausgebildeten, elektrisch isolierenden Seilen zwischen zwei Teilleitern (24), insbesondere zwei spannungsführenden Teilleitern wenigstens eines Übertragungssystems einer Hochspannungsfreileitung, angeordnet wird, und im Zusammenwirken mit wenigstens einem Haltemittel (20) gegenüber wenigstens einem Kreuzungsobjekt (30) und/oder gegenüber wenigstens einem Fest- oder Ankerpunkt (28) an wenigstens einem Halteseil (12) fixiert und/oder positioniert wird.

## Beschreibung

Die Erfindung betrifft ein Sicherungselement, eine Vorrichtung sowie ein Verfahren zur Sicherung von Freileitungen, beispielsweise Hochspannungsfreileitungen, bei deren Montage, Demontage und/oder bei der Durchführung von Instandhaltungsmaßnahmen, insbesondere zum Schutz von Kreuzungsobjekten, wobei auf eine vergleichsweise aufwendige Gerüststellung und/oder eine Abschaltung betroffener Hochspannungsfreileitung zum Schutz darunter liegender, die jeweilige Freileitung kreuzender Objekte verzichtet werden kann.

Bei einer Freileitung handelt es sich um eine elektrische Leitung, bei welcher als Leiter nicht-isolierte Leiterseile eingesetzt sind. Aus Sicherheitsgründen ist bei Freileitungen ein vorbestimmter Bodenabstand einzuhalten, der von der jeweiligen Spannung der Freileitung abhängt; so ist bei Spannungen bis 1 kV ein Mindestbodenabstand von 4 m einzuhalten. Bei einer Hochspannungsfreileitung von beispielsweise 110kV und mehr ist dabei ein entsprechend größerer Bodenabstand von ca. 18 m einzuhalten. Bei einer konventionellen Errichtung, Instandhaltung und/oder Erweiterung, insbesondere auch der Übertragungskapazität sowie der zugehörigen Kommunikationswege, von Hochspannungsfreileitungen sind zum Schutz vor Kreuzungsobjekten, das heißt unterhalb der jeweiligen Freileitung befindlichen Objekten, wie beispielsweise darunterliegenden Wegen, Strassen, Flüssen, Wälder, Bahntrassen und/oder Kommunikationsverbindungen, die betroffenen Hochspannungsfreileitungen in aller Regel abzuschalten beziehungsweise stillzulegen und/oder entsprechende Schutzgerüste aufzustellen beziehungsweise aufzubauen, was für den jeweiligen Netzbetreiber mit erheblichem Aufwand insbesondere auch hinsichtlich Vorbereitungszeit und Kosten, verbunden ist, da er auch sein Netz und damit auch seinen Versorgungsauftrag selbst während der Durchführung von Wartungsarbeiten nicht erfüllen kann. In besonderen Fällen, beispielsweise bei der Versorgung von Krankenhäusern und/oder sicherheitsrelevanten Einrichtungen ist jedoch eine Abschaltung des jeweiligen Versorgungsnetzes über einen längeren Zeitraum nicht möglich.

Der Erfindung liegt die Aufgabe zu Grunde eine effiziente Möglichkeit zur Sicherung von Hochspannungsfreileitungen zum Schutz von darunter liegenden Kreuzungsobjekten anzugeben, welche eine Montage/Demontage von Freileitungen sowie die diesbezügliche Durchführung von Instandhaltungsmaßnahmen mit möglichst geringem Aufwand, insbesondere unter Vermeidung einer Abschaltung des jeweiligen Versorgungsnetzes, ermöglicht.

Vorstehende Aufgabe wird durch ein Sicherungselement mit den Merkmalen des Anspruchs 1 gelöst. Eine Vorrichtung zur Sicherung von Freileitungen, insbesondere von Hochspannungsfreileitungen und ein entsprechendes Verfahren sowie vorteilhafte Ausgestaltungen und Weiterbildungen der Erfindung sind in weiteren Ansprüchen und der nachfolgenden Beschreibung angegeben.

Das erfindungsgemäße Sicherungselement umfasst einen Halterahmen sowie wenigstens eine Laufrolle zur Aufnahme wenigstens einer Freileitung und wenigstens zwei Seilführungsmittel, durch welche das Sicherungselement mit wenigstens jeweils einem Halteseil verbindbar und/oder führbar ist.

In vorteilhafter Ausgestaltung sind dabei die wenigstens zwei Seilführungsmittel, bei montiertem Sicherungselement, im Wesentlichen vertikal ausgerichtet und/oder derart ausgerichtet, dass die Halteseile im Wesentlichen vertikal geführt sind.

Weiterhin ist vorsehbar, dass die beiden Seilführungsmittel als Hohlprofile, vorzugsweise mit kreisförmiger, rechteckiger oder quadratischer Querschnittsfläche, insbesondere als Rohr, ausgebildet sind. Weiterbildend ist auch vorsehbar, dass die Halteseile, bei montiertem Sicherungselement, durch die jeweiligen Seilführungsmittel zumindest über Teilbereiche umschlossen sind und/oder jeweils durch ein Seilführungsmittel hindurchgeführt sind.

In einer vorteilhaften Ausgestaltung weist der Halterahmen wenigstens zwei Schenkel auf, welche über zumindest einen Rollenträger zur Aufnahme und Lagerung der wenigstens einen Laufrolle, insbesondere ein Lagerbolzen und/oder -zapfen, lösbar, beispielsweise mittels Verschraubung, oder nichtlösbar, beispielsweise mittels Verschweißung und/oder Vernietung, miteinander verbunden sind. Weiterhin ist vorsehbar, dass wenigstens eine Laufrolle drehbar auf dem jeweiligen Rollenträger lagerbar ist.

In einer weiteren Ausgestaltung des Sicherungselementes ist vorgesehen, dass die Seilführungsmittel spiegelsymmetrisch zueinander, an den beiden Außenseiten des Halterahmens beziehungsweise der beiden Schenkel angeordnet sind.

Alternativ ist auch vorsehbar, dass jeweils ein Schenkel des Halterahmens als Seilführungsmittel ausgebildet ist und/oder die Seilführungsmittel in den Halterahmen und/oder die Schenkel des Halterahmens integriert sind.

In einer Weiterbildung des Sicherungselementes sind die jeweiligen Seilführungsmittel derart ausgestaltet, dass die eingesetzten Halteseile parallel zum Halterahmen beziehungsweise je ein Halteseil parallel zu jeweils wenigstens einem Schenkel des Halterahmens geführt sind und/oder verlaufen.

In vorteilhafter Ausgestaltung weist das jeweilige Seilführungsmittel wenigstens zwei Komponenten beziehungsweise Teilelemente auf, nämlich wenigstens ein oberes, erstes Teilelement sowie ein unteres, zweites Teilelement.

In Fortführung sind die wenigstens zwei Teilelemente als Hohlprofile, insbesondere Rohre, ausgebildet, wobei das untere, zweite Teilelement bei montiertem Sicherungselement im Wesentlichen in vertikaler Richtung verlaufend ausgerichtet ist und/oder das jeweils obere, erste Teilelement gegenüber dem zugehörigen unteren, zweiten Teilelement um einen Winkel kleiner 90°, insbesondere einem Winkel kleiner 45°, abgewinkelt ist, derart dass das untere, zweite und das obere erste Teilelement einen Winkel von über 90° einschließen.

Die wenigstens zwei Teilelemente des jeweiligen Sicherungsmittels können dabei über ein starres Winkelelement und/oder ein flexibles, insbesondere biegsames, Verbindungselement oder ein Gelenk, insbesondere ein Drehgelenk, verbunden sein. Als flexibles, insbesondere biegsames, Verbindungselement ist dabei auch ein Wellrohr oder ein Wellschlauch oder ein Faltenbalg einsetzbar.

Auch kann das jeweilige Seilführungsmittels einstückig insbesondere mit Abwinkelung und/oder flexibel beziehungsweise biegsam ausgebildet sein.
Der biegsame Abschnitt oder Bereich des jeweiligen Seilführungsmittels kann dabei auch als Wellrohr oder Wellschlauch oder Faltenbalg ausgebildet sein.

In einer weiteren Ausgestaltungsvariante ist das bei montiertem Sicherungselement untere, zweite Teilelement als Hohlprofil ausgebildet, welches wenigstens ein Halteseil, zumindest über wenigstens einen Teilbereich, umschließt und/oder im Wesentlichen in vertikaler Richtung verlaufend ausgerichtet ist, und wobei das jeweils obere, erste Teilelement als Seilführungsrolle für wenigstens ein Halteseil ausgebildet ist.

Die jeweilige Führungsrolle ist dabei bevorzugt an einem Schenkel des Halterahmens angeordnet und/oder drehbar gelagert. Die Drehachse der jeweiligen Führungsrolle ist vorzugsweise senkrecht zur Drehachse der wenigstens einen Laufrolle ausgerichtet.

Führungsrolle und Halterahmen beziehungsweise Schenkel sind vorteilhaft derart zueinander ausgerichtet, dass die jeweilige Führungsrolle mir dem Halterahmen beziehungsweise dem jeweiligen Schenkel abschließt oder diesen leicht überragt, derart, dass eine aufzunehmende Freileitung mittels der Halteseile automatisch über die jeweilige Führungsrolle zur und auf die Laufrolle geführt wird beziehungsweise führbar ist.

In vorteilhafter Weiterbildung des Sicherungselementes ist wenigstens ein Haltemittel vorsehbar, welches mit dem Sicherungselement, insbesondere über ein Kabel, ein Sicherungsseil, eine Kette oder dergleichen verbunden ist. Alternativ kann das Haltemittel auch am Sicherungselement, insbesondere am Halterahmen und/oder an wenigstens einem Seilführungsmittel, angeordnet oder auch als integraler Bestandteil des Halterahmens oder des Seilführungsmittels ausgebildet sein.

Fortbildend kann wenigstens ein Haltemittel als Klemmelement, insbesondere als Schraubklemme, ausgebildet sein, welche an einem Halteseil anordenbar beziehungsweise befestigbar ist und durch welche das Sicherungselement in montiertem Zustand vertikal an wenigstens einem Halteseil positionierbar beziehungsweise ausrichtbar ist.

Weiterhin kann das jeweilige Seilführungsmittel auch drei Teilelemente umfassen, wobei das dritte Teilelement insbesondere in Form wenigstens eines weiteren Hohlprofils oder einer weiteren, unteren Führungsrolle ausbildbar ist.

Demgemäß kann das jeweilige Seilführungsmittel wenigstens eine, im montierten Zustand, obere Führungsrolle, ein zumindest anteilig als Hohlprofil ausgestaltetes mittleres Teilelement sowie wenigstens eine, in montiertem Zustand, untere Führungsrolle aufweisen.

Vorteilhaft kann der Halterahmen im Wesentlichen H-förmig, V-förmig oder Y-förmig oder U-förmig ausgebildet sein.

Auch ist vorsehbar, dass das Sicherungselement mittels der wenigstens zwei Halteseile zwischen zwei Teilleitern, insbesondere zwei spannungsführenden Teilleitern, wenigstens eines Übertragungssystems einer Hochspannungsfreileitung anordenbar und/oder gegenüber wenigstens einem Fest- und/oder Ankerpunkt fixier und/oder positionierbar ist, wobei die Halteseile dabei im Wesentlichen in vertikaler Richtung verlaufen beziehungsweise geführt sind und/oder über die Halteseillänge bestimmbar ist, mit welcher Spannkraft oder Zugkraft die jeweiligen Teilleiter beaufschlagt werden. Über die vertikale Position des Haltemittels ist, unabhängig von der Länge des Halteseiles, bestimmbar, in welchem Abstand das Sicherungselement vom jeweiligen Anker- oder Festpunkt beziehungsweise in welchem Abstand das Sicherungselement vom jeweiligen Kreuzungsobjekt gehaltert wird.

Durch Verwendung der Haltemittel kann grundsätzlich auch auf eine Befestigung oder Fixierung des jeweiligen Halteseiles an einem Fest- und/oder Ankerpunkt verzichtet werden.

In einer Ausgestaltung umfasst das jeweilige Sicherungselement wenigstens zwei drehbar gelagerte Führungsrollen, deren Drehachsen beziehungsweise Lager senkrecht zur Drehachse der wenigstens einen Laufrolle ausgerichtet und/oder angeordnet sind. Vorteilhaft kann die Lauffläche wenigstens einer Führungsrolle dabei konkav oder konisch ausgebildet sein, so dass ein entsprechendes Halteseil gut aufgenommen und gehalten, beziehungsweise das jeweilige Sicherungselement sicher durch das Halteseil getragen und geführt werden kann.

Auch sind in einer weiteren Ausgestaltung die Abmessungen der eingesetzten Seilführungsmittel, beispielsweise der Führungsrollen, insbesondere hinsichtlich Umfang und/oder Durchmesser und/oder Lauffläche, und/oder die lichte Weite der eingesetzten Hohlprofile auf die Dicke beziehungsweise den Durchmesser des jeweilig zu verwendenden Halteseils derart angepasst, dass ein optimaler Sitz sowie Führung des Sicherungselementes auf beziehungsweise am und/oder eine sichere Verbindung mit dem Halteseil gegeben oder bewirkt ist.

Um einen besseren Sitz beziehungsweise Führung der jeweilig bei Montage oder Demontage oder im Sicherungsfall aufzunehmenden Freileitung zu ermöglichen, kann die Lauffläche der wenigstens einen Laufrolle des Sicherungselementes ebenfalls konkav oder konisch ausgebildet und/oder an den Durchmesser beziehungsweise die Dicke der jeweilig zu sichernden Freileitung angepasst sein, so dass diese im Bedarfsfall gut führ- und/oder aufnehmbar ist.

Statt eines Hohlprofils ist alternativ auch ein anderes Profil, beispielsweise ein Teiloder Nutprofil, insbesondere eine Art Schiene, mit beispielsweise U- oder V-Form vorsehbar, wobei zusätzlich wenigstens ein Mittel, beispielsweise ein oder mehrere Bügel und/oder Riegel, vorsehbar sind, um ein Herausspringen des jeweiligen Halteseils aus dem Teil- oder Nutprofil, insbesondere bei plötzlich auftretenden Belastungsspitzen und/oder Seilschwingungen, beispielsweise bei auftretenden stärkeren Winden, zu verhindern und/oder zu hemmen und eine sichere Führung des Sicherungselementes zu bewirken.

Die Verwendung von Führungsrollen im Bereich der Seilführungsmittel ermöglicht eine sehr schonende und/oder flexible Handhabung von Sicherungselement und/oder Halteseil. Auch wird durch die Beaufschlagung von Zugkräften unmittelbar auf die Teilleiter sowie den Einsatz des wenigstens einen Haltemittels eine einfache Positionierung und/oder Zentrierung des Sicherungselementes beispielsweise zwischen zwei Teilleitern, insbesondere zwei spannungsführenden Teilleitern, wenigstens eines Übertragungssystems einer Hochspannungsfreileitung ermöglicht, wobei auf eine genaue Längenbestimmung der eingesetzten Halteseile vorteilhaft verzichtet werden kann.

Vorteilhaft ist wenigstens eine Laufrolle und/oder wenigstens eine Führungsrolle aus elektrisch isolierendem Material, insbesondere einem Kunststoff oder einer Keramik, gebildet.

Auch wird die gestellte Aufgabe durch eine Vorrichtung zur Sicherung von Freileitungen, insbesondere von Hochspannungsfreileitungen gelöst, welche wenigstens ein Sicherungselement der vorgenannten Art sowie wenigstens zwei elektrisch isolierende Halteseile umfasst, wobei die wenigstens zwei Halteseile zur Führung und/oder Halterung des jeweiligen Sicherungselementes vorgesehen sind.

In vorteilhafter Ausgestaltung ist das jeweilige Sicherungselement dabei im Zusammenwirken mit wenigstens einem am jeweiligen Halteseil anbringbaren Haltemittel, insbesondere einer Schraubklemme, vertikal und/oder gegenüber wenigstens einem Fest- oder Ankerpunkt fixier- und/oder positionierbar.

In einer Ausgestaltung der Vorrichtung sind die wenigstens zwei Halteseile jeweils an einem zwischen einem Teilleiter, insbesondere einem spannungsführenden Teilleiter, wenigstens eines Übertragungssystems einer Hochspannungsfreileitung, und wenigstens einem, insbesondere am Boden befindlichen, Fest- oder Ankerpunkt befestigbar und/oder verspannbar.

In einer alternativen Ausführung sind die wenigstens zwei Halteseile jeweils mit einem Ende an einem Teilleiter, insbesondere einem spannungsführenden Teilleiter befestigbar und/oder anordenbar, wobei das andere Ende des Halteseils frei, insbesondere frei beweglich ist.

Eine Befestigung des jeweiligen Halteseils am Teilleiter kann dabei über eine an einem freien Ende des jeweiligen Halteseils anordenbare Klemme erfolgen, wobei es sich bei der Klemme insbesondere um eine Schraubklemme handeln kann.

In einer Weiterbildung der Vorrichtung ist die Position des wenigstens einen Haltemittels am jeweiligen Halteseil derart bestimmbar, dass der zulässige Abstand beziehungsweise geforderte Mindestabstand zwischen dem wenigstens einen eine Freileitung aufnehmenden Sicherungselement und einem jeweiligen Kreuzungsobjekt und/oder der jeweilig aufzunehmenden Freileitung und einem jeweiligen Kreuzungsobjekt, insbesondere auch dem Boden, eingehalten und/oder gegeben ist.

Vorteilhaft kann der einzuhaltende Abstand zum Kreuzungsobjekt mittels des wenigstens einen Haltemittels in Abhängigkeit des jeweiligen Spannungswertes der jeweiligen Freileitung bemessen sein.

In vorteilhafter Ausführung weist die erfindungsgemäße Vorrichtung, das heißt Sicherungselement und Halteseile, im montierten Zustand dabei im Wesentlichen eine X-oder Y-Struktur beziehungsweise eine X- oder y-Form auf.

Ebenfalls ist vorteilhaft vorsehbar, dass die wenigstens zwei als Halteseile vorgesehenen isolierenden Seile und/oder die wenigstens eine Lauf- und/oder Führungsrolle derart ausgebildet ist, dass etwaig auftretende Ableitströme jeweils 500µA nicht überschreiten.

Vorteilhaft ist auch vorsehbar, dass Sicherungselement und Halteseile derart ausgerichtet und/oder angeordnet sind, so dass eine gelöste Freileitung auf und/oder entlang dem jeweiligen Halteseil und/oder Seilführungsmittel automatisch auf die Lauffläche der wenigstens einen Laufrolle des Sicherungselementes geführt wird und/oder führbar ist.

Auch sind zur Sicherung einer Freileitung und/oder zum Schutz eines darunter befindlichen Kreuzungsobjektes eine oder mehrere der vorgenannten Vorrichtungen entlang einer Freileitung zueinander beabstandet anordenbar, wobei insbesondere der Abstand zweier Vorrichtungen in etwa 5 m beträgt.

Die gestellte Aufgabe wird weiterhin auch durch ein Verfahren zur Sicherung von Freileitungen, insbesondere von Hochspannungsfreileitungen, insbesondere unter Verwendung wenigstens einer der vorgenannten Vorrichtungen gelöst, wobei wenigstens ein Sicherungselement mittels wenigstens zwei als Halteseile ausgebildeten, elektrisch isolierenden Seilen zwischen zwei Teilleitern, insbesondere zwei spannungsführenden Teilleitern wenigstens eines Übertragungssystems einer Hochspannungsfreileitung, angeordnet wird, und im Zusammenwirken mit wenigstens einem Haltemittel gegenüber wenigstens einem Kreuzungsobjekt und/oder gegenüber wenigstens einem Fest- oder Ankerpunkt an wenigstens einem Halteseil fixiert und/oder positioniert wird.

Eine verfahrensgemäße Weiterbildung sieht vor, dass jeweils ein Halteseil eingesetzt wird, welches an zumindest einem freien Ende, vorzugsweise über eine Klemmverbindung, lösbar mit dem jeweiligen Teilleiter verbunden beziehungsweise an diesem befestigt wird.

Verfahrensgemäß ist weiterbildend auch vorsehbar, dass die Befestigung der wenigstens zwei Halteseile an den, insbesondere spannungsführenden Teilleitern, durch Befahren der Teilleiter mit geeigneten Leitungsfahrwagen und/oder dem Einsatz von geeigneten hochisolierenden Hubarbeitsbühnen durchgeführt wird.

Vorteilhaft kann das jeweilige Sicherungselement in einer weiteren Verfahrensausprägung mit wenigstens zwei als Halteseile ausgebildeten elektrisch isolierenden Seilen gegenüber wenigstens einem Kreuzungsobjekt und/oder gegenüber wenigstens einem Fest- oder Ankerpunkt derart angeordnet und/oder verspannt wird, dass das wenigstens eine Führungsseil, das Sicherungselement sowie die wenigstens zwei Halteseile eine X- oder Y-Form beziehungsweise X- oder Y-Struktur aufweisen.

Verfahrensgemäß wird bei Montage und/oder Demontage und/oder im Sicherungsfall durch wenigstens ein Halteseil und/oder ein Sicherungsmittel die jeweilig aufzunehmende Freileitung schonend und beschädigungsfrei auf die wenigstens eine Laufrolle des jeweiligen Sicherungselementes geführt. Vorteilhaft läuft dieser Vorgang dabei weitestgehend automatisch ab.

Auch ist vorsehbar, dass zur Sicherung einer Freileitung und/oder zum Schutz eines jeweiligen Kreuzungsobjektes mehrere Vorrichtungen zur Sicherung von Freileitungen hintereinander und zueinander beabstandet angeordnet werden. Die Anzahl der einzusetzenden Vorrichtungen richtet sich dabei nach deren Abstand zueinander sowie dem zu querenden beziehungsweise zu überbrückenden Kreuzungsobjekt, welches vor möglichen Beschädigungen durch die betreffende Freileitung geschützt und/oder bewahrt werden soll.

Die vorliegende Erfindung erlaubt demgemäß, auch aufgrund der einfachen und schnellen Montagemöglichkeit, eine effiziente Sicherung von Hochspannungsfreileitungen zum Schutz von darunter liegenden Kreuzungsobjekten bei vergleichweise geringem Aufwand durchzuführen, da aufwendige Gerüstarbeiten vermieden werden und insbesondere auf eine Abschaltung des jeweiligen Versorgungsnetzes verzichtet werden kann.

Die weitere Darlegung der Erfindung erfolgt anhand einiger Figuren und Ausführungsbeispiele.

Vorteilhafte Ausgestaltungen und Weiterbildungen der Erfindung sind anhand von einigen Figuren und Ausführungsbeispielen angegeben.

### Es zeigen

Fig. 1 beispielhaft ausgebildete Vorrichtung zur Sicherung von Freileitungen mit zwei Halteseilen und Sicherungselement mit Seilführungsmittel mit je zwei Hohlprofil-Teilelementen,
Fig. 2 beispielhaft ausgebildete Vorrichtung zur Sicherung von Freileitungen mit zwei Halteseilen und Sicherungselement mit Seilführungsmittel mit je drei Hohlprofil-Teilelementen,
Fig. 3 beispielhaft ausgebildete Vorrichtung zur Sicherung von Freileitungen mit zwei Halteseilen und Sicherungselement mit Seilführungsmittel mit je zwei beweglich verbundenen Hohlprofil-Teilelementen,
Fig. 4 beispielhaft ausgebildete Vorrichtung zur Sicherung von Freileitungen mit zwei Halteseilen und Sicherungselement mit Seilführungsmittel mit je drei Teilelementen, wobei je zwei Hohlprofil-Teilelemente eines Seilführungsmittels beweglich verbunden sind,
Fig. 5 beispielhaft ausgebildete Vorrichtung zur Sicherung von Freileitungen mit zwei Halteseilen und Sicherungselement mit Seilführungsmittel mit je drei beweglich verbundenen Hohlprofil-Teilelementen
Fig. 6 beispielhaft ausgebildete Vorrichtung zur Sicherung von Freileitungen mit zwei Halteseilen und Sicherungselement mit Seilführungsmittel mit je einem Hohlprofil-Teilelement und zwei Seilführungsrollen und
Fig. 7 beispielhafte Anordnung von mehreren Vorrichtungen zur Sicherung von Freileitungen mit je zwei Halteseilen und einem Sicherungselement mit Seilführungsmitteln zwischen zwei spannungsführenden Teilleitern eines Übertragungssystems einer Hochspannungsfreileitung.

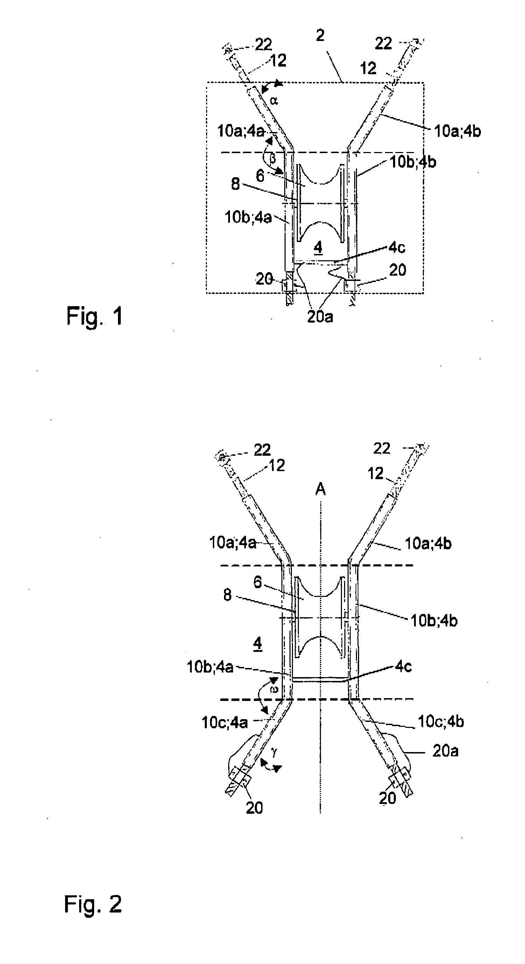

In Figur 1 ist eine Vorrichtung zur Sicherung von Freileitungen, insbesondere von Hochspannungsfreileitungen, zum Schutz von darunter liegenden Kreuzungsobjekten, wie beispielsweise Wegen, Strassen, Gebäuden, Bahntrassen, Flüssen oder Telefonleitungen, gezeigt. Diese Vorrichtung umfasst ein Sicherungselement 2 mit einem Halterahmen 4 sowie einer Laufrolle 6, zur Aufnahme wenigstens einer zu montierenden oder demontierenden Freileitung, sowie zwei Seilführungsmittel 10.

Der Halterahmen 4 weist dabei im Wesentlichen zwei Schenkel 4a,4b auf, wobei jeder Schenkel 4a,4b als Seilführungsmittel 10 zur Aufnahme und Führung jeweils eines Halteseiles 12 ausgebildet ist. Demgemäß sind die Seilführungsmittel in den Halterahmen 4 und/oder die Schenkel 4a,4b des Halterahmens 4 integriert, wobei Schenkel 40a,4b beziehungsweise Seifführungsmittel 10 sind dabei spiegelsymmetrisch zueinander angeordnet und/oder ausgebildet sind.

Die beiden Schenkel 4a,4b des Halterahmens 4 beziehungsweise die Seilführungsmittel 10 sind über einen insbesondere mittels Verschraubung lösbar angeordneten Rollenträger 8, welcher als Rundsteg und/oder Lagerbolzen beziehungsweise - zapfen ausgebildet ist, miteinander verbunden. Auf dem Rollenträger 8 ist eine Laufrolle 6 zur Aufnahme einer Freileitung drehbeweglich gelagert und/oder gehaltert. Zusätzlich sind die beiden Schenkel 4a,4b aus Stäbilitätserwägungen noch über einen unterhalb der Laufrolle 6 angeordneten Steg 4c, insbesondere durch Verschweißung, starr miteinander verbunden

Jedes Seilführungsmittel 10 weist wenigstens zwei Komponenten auf, nämlich wenigstens ein oberes erstes Teilelement 10a sowie ein unteres zweites Teilelement 10b. Im hier gezeigten Beispiels sind die jeweils zwei Teilelemente 10a,10b eines Seilführungsmittels 10 als Hohlprofile, vorzugsweise mit kreisförmiger, rechteckiger oder quadratischer Querschnittsfläche, insbesondere als Rohr, ausgebildet, wobei jeweils ein Halteseil 12 durch ein Seilführungsmittel 10 hindurchgeführt und zumindest über Teilbereiche von diesem umschlossen ist.

Jeweils das untere zweite Teilelement 10b ist bei montiertem Sicherungselement 2 im Wesentlichen in vertikaler Richtung verlaufend ausgerichtet, wobei das jeweils obere erste Teilelement 10a gegenüber dem zugehörigen unteren zweiten Teilelement 10b um einen Winkel α kleiner 90°, insbesondere einem Winkel kleiner 45°, abgewinkelt ist, derart dass das untere zweite 10b und das obere erste Teilelement 10a einen Winkel β von über 90° einschließen.

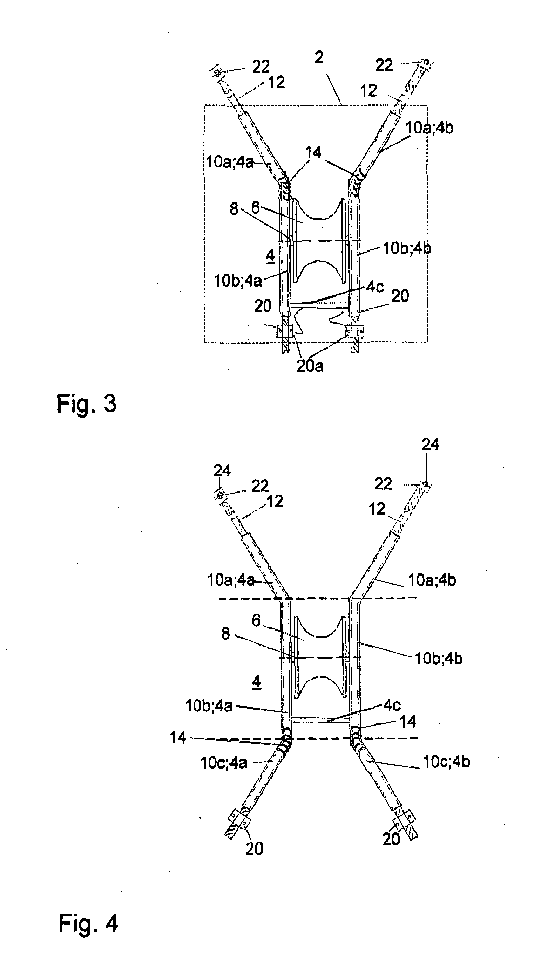

Die wenigstens zwei Teilelemente 10a, 10b des jeweiligen Seilführungsmittels 2 können dabei über ein starres Winkelelement, wie in Fig. 1 gezeigt, oder, wie in Fig. 3 gezeigt, über ein flexibles, insbesondere biegsames, Verbindungselement 14 oder ein Gelenk, insbesondere ein Drehgelenk, verbunden sein.

Das jeweilige Seilführungsmittel 10 ist dabei auch einstückig ausbildbar, insbesondere mit Abwinkelung und/oder mit flexiblem beziehungsweise biegsamem Bereich.

Der biegsame Abschnitt oder Bereich beziehungsweise das Verbindungselement des jeweiligen Seilführungsmittels 2 kann dabei auch als Wellrohr oder Wellschlauch oder Faltenbalg ausgebildet sein, wie in Fig. 2 bis Fig. 5 gezeigt.

Weiterhin ist wenigstens ein Haltemittel 20 vorsehbar, welches mit dem Sicherungselement 2, insbesondere über ein Kabel 20a, ein Sicherungsseil, eine Kette oder dergleichen verbunden ist. Alternativ kann das Haltemittel 20 auch am Sicherungselement 2, insbesondere am Halterahmen 4 und/oder an wenigstens einem Seilführungsmittel 10, angeordnet oder auch als integraler Bestandteil des Halterahmens 4 oder des Seilführungsmittels 10 ausgebildet sein.

Im hier gezeigten Beispiel sind die beiden Haltemittel 20 als Klemmelemente, insbesondere als Schraubklemmen, ausgebildet, welche an je einem Halteseil 12 angeordnet beziehungsweise an diesem befestigt sind und durch welche das Sicherungselement 2 in montiertem Zustand vertikal an wenigstens einem Halteseil 12 positionierbar beziehungsweise ausrichtbar ist.

Der Halterahmen 4 weist im Wesentlichen eine H-Form auf, kann jedoch grundsätzlich auch andere Gestaltungsformen aufweisen und beispielsweise auch V-förmig oder Y-förmig oder U-förmig ausgebildet sein.

Das Sicherungselement 2 kann mittels der zwei Halteseile 12 zwischen zwei Teilleitern 26, insbesondere zwei spannungsführenden Teilleitern, wenigstens eines Übertragungssystems einer Hochspannungsfreileitung angeordnet werden und/oder gegenüber wenigstens einem Fest- und/oder Ankerpunkt 28 fixiert und/oder positioniert werden.

Eine Befestigung des jeweiligen Halteseils 12 am Teilleiter 24 erfolgt dabei über eine an einem freien Ende des jeweiligen Halteseils 12 angeordnete Klemme 22, wobei es sich bei der Klemme 22 insbesondere um eine Schraubklemme handelt.

Die Halteseile 12 verlaufen dabei im Wesentlichen in vertikaler Richtung beziehungsweise sind vertikal nach Unten geführt.

Darüber hinaus ist jedes Halteseil 12 auch über entsprechende Klemmen 22 mit je einer Teilleitung 24 eines Übertragungssystems einer Hochspannungsfreileitung lösbar verbunden. Die beiden durch die Seilführungsmittel 10 geführten Halteseile 12 sind bei Verlassen der Seilführungsmittel 10 parallel ausgerichtet und nach unten geführt, wo sie an wenigstens einem Fest- oder Ankerpunkt 28 am Boden befestigt und/oder verspannt sind.

Auch können mehrere, nämlich pro Halteseil maximal ein Fest- und/oder Ankerpunkte 28 vorgesehen sein, wobei je zwei Ankerpunkte 28 an einander gegenüberliegenden Seiten, das jeweilige Kreuzungsobjekt flankierend, angeordnet sein können. Der jeweilige Fest- und/oder Ankerpunkt 28 kann dabei durch ein entsprechendes Befestigungsmittel wie beispielsweise Bodenanker, Einschlagpfosten, Betonfundament mit Befestigungsöse oder -haken oder dergleichen mehr gebildet sein.

Auch gekreuzte Halteseile 12 sind grundsätzlich möglich, wobei durch deren Verspannung dann jedoch ein auszugleichendes Drehmoment auf das Sicherungselement 2 beaufschlagt wird.

Bei Verspannung an einem Fest- oder Ankerpunkt 28 ist über die Halteseillänge bestimmbar, mit welcher Spannkraft oder Zugkraft die jeweiligen Teilleiter 24 beaufschlagt werden. Entfällt die Verspannung, wirkt zunächst lediglich die Gewichtskraft der Halteseile 12 sowie des Sicherungselementes 2 auf die Teilleiter 24.

Über die vertikale Position des Haltemittels 20 ist unabhängig von der Länge des jeweiligen Halteseiles 12 bestimmbar, in welchem vertikalen Abstand das Sicherungselement 2 vom jeweiligen Anker- oder Festpunkt 28 beziehungsweise in welchem Abstand das Sicherungselement 2 vom jeweiligen Kreuzungsobjekt 30 gehaltert wird.

Durch Verwendung der Haltemittel 20 könnte grundsätzlich auch auf eine Befestigung oder Fixierung des jeweiligen Halteseiles 20 an einem Fest- und/oder Ankerpunkt 28 verzichtet werden, was die Montage wesentlich vereinfacht.

Um einen besseren Sitz beziehungsweise Führung der jeweilig bei Montage oder Demontage oder im Sicherungsfall aufzunehmenden Freileitung 32 zu ermöglichen, kann die Lauffläche der wenigstens einen Laufrolle 6 des Sicherungselementes 2 konkav oder konisch ausgebildet und/oder an den Durchmesser beziehungsweise die Dicke der jeweilig zu sichernden Freileitung 32 angepasst sein, so dass diese im Bedarfsfall gut führ- und/oder aufnehmbar ist.

Statt eines Hohlprofils kann das jeweilige Seilführungsmittel 10 alternativ auch ein Teil- oder Nutprofil, insbesondere eine Art Schiene, mit beispielsweise U- oder V-Form aufweisen, wobei zusätzlich wenigstens ein Mittel, beispielsweise ein oder mehrere Bügel und/oder Riegel, vorzusehen sind, um ein Herausspringen des jeweiligen Halteseils 12 aus dem Teilprofil und eine sichere Führung des Sicherungselementes 2, insbesondere bei plötzlich auftretenden Belastungsspitzen und/oder Seilschwingungen, beispielsweise bei auftretenden stärkeren Winden, zu verhindern und/oder zu hemmen.

Vorteilhaft kann die jeweilige Laufrolle 6 aus elektrisch isolierendem Material, insbesondere einem Kunststoff oder einer Keramik, gebildet sein, der vorzugsweise Ableitströme lediglich bis 500 µA zulässt.

Sicherungselement 2 und Halteseile 12 weisen in montiertem Zustand dabei im Wesentlichen eine X- oder Y-Struktur beziehungsweise eine X- oder y-Form auf,

Darüber hinaus sind Sicherungselement 2 und Halteseile 12 derart ausgerichtet und/oder angeordnet, so dass eine gelöste Freileitung 32 auf und/oder entlang dem jeweiligen Halteseil und/oder Seilführungsmittel 10 automatisch auf die Lauffläche der wenigstens einen Laufrolle 6 des Sicherungselementes 2 geführt wird.

In Figur 2 ist eine weitere beispielhaft ausgebildete Vorrichtung zur Sicherung von Freileitungen mit zwei Halteseilen 12 und einem Sicherungselement 2 mit zwei Seilführungsmittel 2 mit je drei Hohlprofil-Teilelementen 10a,10b,10c gezeigt.

Die Ausführungsform gemäß Fig.2 stimmt dabei in nahezu allen wesentlichen Merkmal mit der aus Fig. 1 bekannten Vorrichtung überein, so dass zur näheren Darlegung auf die Beschreibung zur Fig. 1 verwiesen wird.

Im Unterschied zu Fig. 1 umfasst jedes Seilführungsmittel 2 der in Fig. 2 gezeigten Vorrichtung drei als Hohlprofile ausgestaltete Teilelemente 10a,10b,10c, wobei sich an das nunmehr mittlere zweite Teilelement 10b ein unteres drittes Teilelement 10c anschließt, das gegenüber dem zweiten Teilelement 10b um einen Winkel γ , kleiner als 90°, abgewinkelt ist beziehungsweise mit dem zweiten Teilelement 10b einen Winkel ω größer 90° einschließt. Der Winkel ω kann dabei dem Winkel β sowie der Winkel γ dem Winkel α entsprechen. Die beiden Seilführungsmittel 10 sind idealerweise spiegelsymmetrisch zur Ebene A ausgebildet.

Durch das jeweils abgewinkelte dritte Teilelement 10c ergibt sich eine X-Struktur sowohl für das Sicherungselement 2 als auch für die jeweilige Vorrichtung.
Durch diese Struktur ist bei schonender Behandlung der Halteseile 12, Scheuerkanten werden vermieden, eine einfache und sichere Befestigung der Halteseile 12 zu beiden Seiten eines Kreuzungsobjektes, beispielsweise einer Strasse oder einer anderen Leitung, ermöglicht.

In Fig. 3 ist eine weitere beispielhaft ausgebildete Vorrichtung zur Sicherung von Freileitungen mit zwei Halteseilen 12 und einem Sicherungselement 2 mit zwei Seilführungsmitteln 10 mit je zwei beweglich verbundenen Hohlprofil-Teilelementen 10a,10b gezeigt.

Die hier gezeigte Ausführungsform entspricht weitestgehend dem aus Fig. 1 bekannten Beispiel. So dass zur weiteren Erläuterung und Darlegung auf die Ausführungen zu Figur 1 verwiesen wird.

Der einzige Unterschied zu Fig. 1 besteht darin, dass jeweils das obere erste Teilelement 10a und das untere zweite Teilelement 10b über ein bewegliches Verbindungselement 14 verbunden sind. Das Verbindungselement 14 ist beispielhaft als Wellrohr mit entsprechender Biegefestigkeit und/oder Steifigkeit ausgestaltet, welches mit den beiden zugehörigen Teilelemente 10a,10b verschweißt oder verpresst oder verklemmt ist.

Alternativ zu einem Biegeelement kann auch ein entsprechend ausgebildetes Gelenk vorgesehen werden.

Durch die beweglichen Hohlprofil -Teilelemente 10a können die Haltemittel 20 in nahezu beliebiger vertikaler Lage und/oder Position angebracht werden, ohne dass es zu einer Schädigung des jeweiligen Halteseils 12 kommt, da sich die Winkel α und β dem Halteseilverlauf zwischen den beiden Teilleitern 24 anpassen und die ersten Teilelemente 10a diesem Verlauf folgen beziehungsweise sich diesem ebenfalls anpassen.

Dies kann auch dann von Interesse sein, wenn die Vorrichtung zwischen unterschiedlich beabstandeten Teilleitern 24 zum Einsatz kommt oder unterschiedliche Zug- oder Spannkräfte auf die Teilleiter 24 beaufschlagt werden.

Besonders bei auftretenden Winden oder sich ändernden Lasten und damit auch veränderlichen Spannwinkeln ist auf diese Weise eine besonders schonende Handhabung der eingesetzten Halteseile 12 ermöglicht.

In Fig. 4 ist eine weitere beispielhaft ausgebildete Vorrichtung zur Sicherung von Freileitungen mit zwei Halteseilen 12 und einem Sicherungselement 2 mit zwei Seilführungsmitteln 10 mit je drei Teilelementen 10a, 10b, 10c gezeigt, wovon je zwei Hohlprofil-Teilelemente 10b,10c beweglich verbunden sind.

Die hier gezeigte Ausführungsform entspricht weitestgehend dem aus Fig. 2 bekannten Beispiel, so dass zur weiteren Erläuterung und Darlegung auf die Ausführungen zu Figur 2 verwiesen wird.

Ein Unterschied zu Fig. 2 besteht darin, dass jeweils das mittlere, zweite Teilelement 10b und das untere, dritte Teilelement 10c über ein bewegliches Verbindungselement 14 verbunden sind. Das Verbindungselement 14 ist beispielhaft als Wellrohr mit entsprechender Biegefestigkeit und/oder Steifigkeit ausgestaltet, welches mit den beiden zugehörigen Teilelementen 10b,10c formschlüssig verbunden, insbesondere verschweißt oder verpresst oder verklemmt ist.

Alternativ zu einem Biegeelement kann auch ein entsprechend ausgebildetes Gelenk vorgesehen werden.

Durch die beweglichen Hohlprofil -Teilelemente 10c können die Fest- oder Ankerpunkte 28 in nahezu beliebiger Lage und oder Position, auch asymmetrisch zum jeweiligen Kreuzungsobjekt 30 gewählt werden, ohne dass es zu einer Schädigung des jeweiligen Halteseils 12 kommt, da sich die Winkel γ und ω dem Halteseilverlauf anpassen und die dritten Teilelemente 10c diesem Verlauf folgen beziehungsweise sich diesem anpassen.

Besonders bei auftretenden Winden oder sich ändernden Lasten und damit auch veränderlichen Spannwinkein ist auf diese Weise eine besonders flexible Nutzung der jeweiligen Vorrichtung und schonende Handhabung der eingesetzten Halteseile 12 ermöglicht, da Scheuerkannten und Beschädigungen oder Abnutzungen der Halteseile vermieden sind.

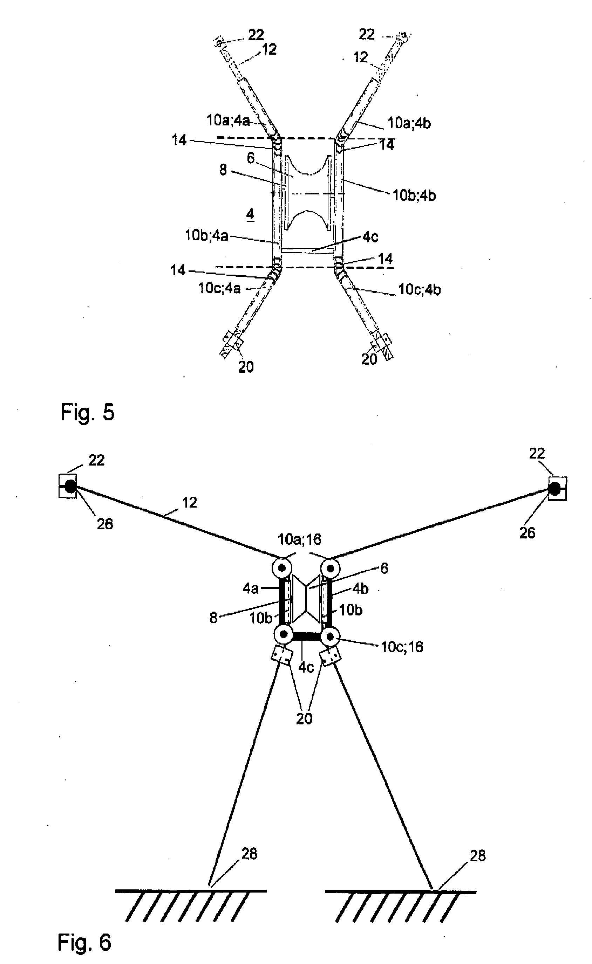

In Fig. 5 ist eine weitere beispielhaft ausgebildete Vorrichtung zur Sicherung von Freileitungen mit zwei Halteseilen 12 und Sicherungselement 2 mit zwei Seilführungsmitteln 10 mit je drei beweglich und formschlüssig verbundenen Hohlprofil-Teilelementen 10a,10b, 10c gezeigt. Fig. 5 zeigt damit eine Kombination der aus Fig. 3 und Fig. 4 bekannten Vorrichtungen, bei welcher jeweils sowohl zwischen dem ersten 10a und zweiten 10b sowie zwischen dem zweiten 10b und dritten 10c Hohlprofil-Teilelement bewegliche Verbindungselemente 14, insbesondere in Form vorn Wellrohren oder Gelenken, vorgesehen sind. Demgemäß vereint die hier gezeigte Vorrichtung auch die Vorzüge gemäß Fig. 3 und Fig. 4 in sich.

Zur weiteren Darlegung und Erläuterung wird auf die Figurenbeschreibung zur Figur 3 und Figur 4 verwiesen und auf diese Bezug genommen.

Eine alternative Ausführungsvariante einer Vorrichtung zur Sicherung von Freileitungen mit zwei Halteseilen 12 und Sicherungselement 2 mit zwei Seilführungsmitteln 10 mit je einem als Hohlprofil ausgestalteten mittleren, zweiten Teilelement 10b und zwei Seilführungsrollen 16 als erstes 10a und drittes 10c Teilelement, ist in Fig. 6 gezeigt.

Diese Vorrichtung umfasst ein Sicherungselement 2 mit einem Halterahmen 4 sowie einer Laufrolle 6, zur Aufnahme wenigstens einer zu montierenden oder demontierenden Freileitung 32, sowie zwei Seilführungsmittel 10.

Der Halterahmen 4 weist dabei im Wesentlichen zwei Schenkel 4a,4b auf, wobei an jedem Schenkel 4a,4b ein Seilführungsmittel 10 zur Aufnahme und Führung jeweils eines Halteseiles 12 angeordnet ist. Die beiden Schenkel 4a,4b des Halterahmens 4 sind über einen insbesondere mittels Verschraubung lösbar angeordneten Rollenträger 8, welcher als Rundsteg und/oder Lagerbolzen beziehungsweise -zapfen ausgebildet ist, miteinander verbunden. Auf dem Rollenträger 8 ist eine Laufrolle 6 zur Aufnahme einer Freileitung drehbeweglich gelagert und/oder gehaltert. Zusätzlich sind die beiden Schenkel 4a,4b aus Stäbilitätserwägungen noch über einen unterhalb der Laufrolle 6 beziehungsweise des Rollenträgers 8 angeordneten Steg 4c, insbesondere durch Verschweißung, starr miteinander verbunden.

Jedes Seilführungsmittel 10 weist drei Komponenten beziehungsweise Teilelemente auf, nämlich ein oberes, erstes Teilelement 10a sowie ein mittleres, zweites Teilelement 10b sowie ein unteres, drittes Teilelement 10c. Im hier gezeigten Beispiel ist jeweils das erste 10a sowie das dritte Teilelement 10c als Seilführungsrolle 16 ausgebildet. Das jeweils zweite Teilelement 10b eines Seilführungsmittels 10 ist als Hohlprofil, vorzugsweise mit kreisförmiger, rechteckiger oder quadratischer Querschnittsfläche, insbesondere als Rohr, ausgebildet. Jeweils ein Halteseil 12 wird um die Seilführungsrollen 16 herum und durch das Hohlprofil hindurchgeführt und zumindest über Teilbereiche von diesem umschlossen.

Die beiden Seilführungsmittel 10 sind dabei spiegelsymmetrisch ausgebildet.

Jeweils das als Hohlprofil ausgebildete zweite Teilelement 10b ist bei montiertem Sicherungselement 2 im Wesentlichen in vertikaler Richtung verlaufend ausgerichtet.

Die jeweilige Führungsrolle 16 ist an einem Schenkel 4a,4b des Halterahmens 4, insbesondere an dessen Endbereich, angeordnet und/oder drehbar gelagert. Die Drehachse der jeweiligen Führungsrolle 16 ist senkrecht zur Drehachse der wenigstens einen Laufrolle 6 ausgerichtet.

Führungsrolle 6 und Halterahmen 4 beziehungsweise Schenkel 4a,4b sind vorteilhaft derart zueinander ausgerichtet, dass die jeweilige Führungsrolle 16 mit dem Halterahmen 4 beziehungsweise dem jeweiligen Schenkel 4a,4b abschließt oder diesen leicht überragt, derart, dass eine aufzunehmende Freileitung mittels der Halteseile12 automatisch über die jeweilige Führungsrolle 16zur und auf die Laufrolle 6 geführt wird.

Die Lauffläche wenigstens einer Seilführungsrolle 16 ist dabei konkav oder konisch ausgebildet, so dass ein entsprechendes Halteseil 12 gut aufgenommen und gehalten, beziehungsweise das jeweilige Sicherungselement 2 sicher durch das Halteseil 12 getragen und geführt werden kann.

Die Abmessungen der eingesetzten Seilführungsmittel 10, insbesondere der Führungsrollen 16, sind, hinsichtlich Umfang und/oder Durchmesser und/oder Lauffläche und/oder lichte Weite der eingesetzten Hohlprofile 10b, auf die Dicke beziehungsweise den Durchmesser des jeweilig zu verwendenden Halteseils 12 derart angepasst, dass ein optimaler Sitz des Sicherungselementes 2 auf beziehungsweise am sowie eine sichere Verbindung mit dem Halteseil gegeben ist.

Die Verwendung von Führungsrollen 16 im Bereich der Seilführungsmittel 10 ermöglicht eine besonders schonende und/oder flexible Handhabung von Sicherungselement 2 und/oder Halteseil 12. Auch wird durch die Verwendung von Führungsrollen 16 sowie den Einsatz des wenigstens einen Haltemittels 20 eine einfache Positionierung und/oder Anordnung des jeweiligen Sicherungselementes 2 beispielsweise zwischen zwei Teilleitern 24, insbesondere zwei spannungsführenden Teilleitern, wenigstens eines Übertragungssystems einer Hochspannungsfreileitung, ermöglicht und durchführbar, wobei auf eine genaue Längenbestimmung der eingesetzten Halteseile 12 vorteilhaft verzichtet werden kann.

Das jeweilige Halteseil 12 ist dabei in vertikaler Richtung, schräg nach unten zu einem am Boden befindlichen Fest- und/oder Ankerpunkt 28 geführt. Der jeweilige Fest- und/oder Ankerpunkt 28 kann dabei durch entsprechende Befestigungsmittel wie beispielsweise Bodenanker, Einschlagpfosten, Betonfundament mit Befestigungsöse oder -haken oder dergleichen mehr gebildet sein.

Ein weitere Vorteil der erfindungsgemäßen Vorrichtung besteht darin, dass bei Befestigung und/oder Verspannung der jeweiligen Halteseile 12 an einem jeweiligen Fest- oder Ankepunkt 28 erzeugte Zugkräfte nicht auf das Sicherungselement 2, sondern unmittelbar auf die jeweiligen Teilleiter 24 und die daran befestigten Halteseile 12 wirken. Das Sicherungselement wird somit weniger belastet und kann dementsprechend einfacher beziehungsweise weniger aufwendig, auch im Sinne von schwächer oder geringer dimensioniert, ausgebildet werden.

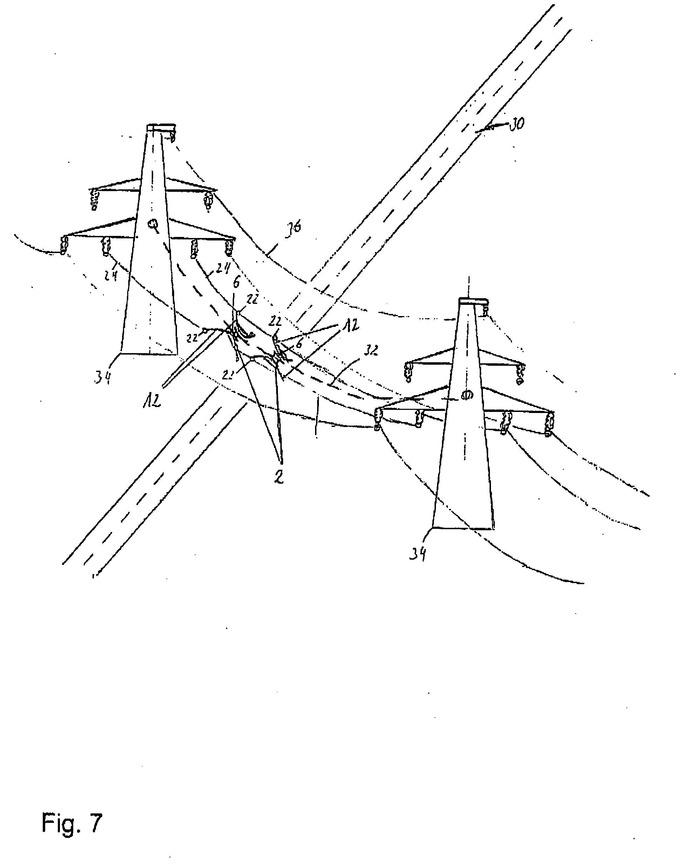

In Fig. 7 ist eine beispielhafte Anordnung von mehreren Vorrichtungen zur Sicherung von Freileitungen und zum Schutz von Kreuzungsobjekten 30, wie beispielsweise Strassen, mit je zwei Halteseilen 12 und einem Sicherungselement 2 mit Seilführungsmitteln 10 gezeigt wobei die jeweiligen Vorrichtungen zwischen zwei spannungsführenden Teilleitern 24 eines Übertragungssystems einer Hochspannungsfreileitung 32 angeordnet sind. Die Fig. 7 zeigt dementsprechend zwei Freileitungsmasten 34 mit Traversen für insgesamt sechs Leitungsseile und ein als Blitzschutz über die Mastspitze geführtes Erdungsseil, sowie mit einer entsprechenden Anzahl an Isolatoren zur Halterung der jeweiligen Leitungsseile am jeweiligen Mast, insbesondere ein Tragmast. Zwischen den beiden gezeigten Masten 34 sind bereits vier Leitungsseile (Teilleiter) 24 sowie ein Erdungsseil 36 geführt. Zwei Freileitungen sind noch zu montieren beziehungsweise aufzulegen. Zur Sicherung der zu montierenden Freileitung 32 sowie zum Schutz der die Freileitung kreuzenden Strasse 30, werden zwei Sicherungselemente 2 mittels jeweils zweier elektrisch isolierender Halteseile 12 zwischen zwei Teilleitern 24, insbesondere zwei spannungsführenden Teilleitern, des jeweiligen Übertragungssystems einer Hochspannungsfreileitung, zueinander beabstandet angeordnet. Der Abstand beträgt dabei ca. 5 m. Mittels entsprechender Haltemittel 20, insbesondere am jeweiligen Halteseil 12 unterhalb des Sicherungselementes 2 angeordneter Schraubklemmen, auf denen das Sicherungselement 2 aufsitzt, werden die Sicherungselemente 2 gegenüber dem Kreuzungsobjekt, hier der Strasse 30 und/oder gegenüber wenigstens einem Fest- oder Ankerpunkt 28 fixiert und/oder positioniert. Das jeweilige Halteseil 12 ist an zumindest einem freien Ende, vorzugsweise über eine Klemmverbindung, lösbar mit dem jeweiligen Teilleiter 24 verbunden beziehungsweise an diesem befestigt.

Die Befestigung der Halteseile 12 an den Teilleitern 24 und die Montage der Sicherungselement kann durch Befahren der Teilleiter 24 mit geeigneten Leitungsfahrwagen und/oder dem Einsatz von geeigneten hochisolierenden Hubarbeitsbühnen durchgeführt werden.

Bei Montage und/oder Demontage und/oder im Sicherungsfall wird die jeweilig aufzunehmende Freileitung 32 durch zwei Halteseile 12 und/oder zwei Seilführungsmittelmittel 10 schonend und beschädigungsfrei auf die beiden Laufrollen 6 der beiden eingesetzten Sicherungselemente 2 geführt.

Die Anzahl der jeweils einzusetzenden Vorrichtungen und/oder Sicherungselemente ergibt sich aus dem gewählten Abstand sowie der Größe/Ausdehnung des zu querenden beziehungsweise zu überbrückenden Kreuzungsobjektes 30.

Die vorliegende Erfindung ist dabei keinesfalls auf die hier dargelegten Ausführungsbeispiele beschränkt, sondern es werden vielmehr jedwede Kombinationen aus Haltemitteln 20, sowie Seilführungsmittel 10 mit unterschiedlich ausgebildeten Teilelementen 10a,10b,10c, insbesondere profiliert oder als Rollen, und unterschiedlicher Anzahl an Teilelementen sowie unterschiedliche Gestaltungen des Halterahmens 4 mit umfasst.

### Bezugszeichenliste

- 2: Sicherungselement
- 4: Halterahmen
- 4a, 4b: zwei Schenkel des Halterahmens
- 4c: Steg des Halterahmens
- 6: Laufrolle
- 8: Rollenträger
- 10: Seilführungsmittel
- 10a: erstes Teilelement des Seilführungsmittels
- 10b: zweites Teilelement des Seilführungsmittels
- 10c: drittes Teilelement des Seilführungsmittels
- 12: Halteseil
- 14: Verbindungselement
- 16: Seilführungsrolle
- 20: Haltemittel zur Befestigung am Halteseil
- 20a: Kabel oder Seil oder Kette zur Verbindung von Haltemittel und Sicherungselement
- 22: Klemme zur Befestigung am Teilleiter
- 24: Teilleiter
- 28: Fix- und/oder Ankerpunkt
- 30: Kreuzungsobjekt Strasse
- 32: aufzunehmende und/oder zu montierende Freileitung
- 34: Freileitungsmast
- 36: Erdseil

## Patentansprüche

1. Sicherungselement (2) mit einem Halterahmen (4) mit wenigstens einer Laufrolle (6) zur Aufnahme wenigstens einer Freileitung (32), wobei wenigstens zwei Seilführungsmittel (10) vorgesehen sind, durch welche das Sicherungselement (2) mit wenigstens jeweils einem Halteseil (12) verbindbar und/oder führbar ist.

2. Sicherungselement (2) nach Anspruch 1, **dadurch gekennzeichnet, dass** die wenigstens zwei Seilführungsmittel (10), bei montiertem Sicherungselement (2), im Wesentlichen vertikal ausgerichtet sind und/oder derart ausgerichtet sind, dass die Halteseile (12) im Wesentlichen vertikal geführt sind.

3. Sicherungselement (2) nach einem der vorherigen Ansprüche, **dadurch gekennzeichnet, das** die jeweiligen Seilführungsmittel (10) derart ausgebildet sind, dass jeweils wenigstens ein Halteseil (12) durch ein Seilführungsmittel (10) zumindest über Teilbereiche umschließbar ist und/oder jeweils durch ein Seilführungsmittel (10) hindurchführbar ist.

4. Sicherungselement (2) nach einem der vorherigen Ansprüche, **dadurch gekennzeichnet, dass** der Halterahmen (4) wenigstens zwei Schenkel aufweist (4a,4b), welche über zumindest einen Rollenträger (8) zur Aufnahme und Lagerung der wenigstens einen Laufrolle (6), insbesondere ein Lagerbolzen und/oder -zapfen, lösbar, insbesondere mittels Verschraubung, oder nichtlösbar, insbesondere mittels Verschweißung und/oder Vernietung, miteinander verbunden sind.

5. Sicherungselement (2) nach einem der vorherigen Ansprüche, **dadurch gekennzeichnet, dass** wenigstens eine Laufrolle (6) drehbar auf einem Rollenträger (8) gelagert und/oder gehaltert ist.

6. Sicherungselement (2) nach einem der vorherigen Ansprüche, **dadurch gekennzeichnet; dass** das jeweilige Seilführungsmittel (10) wenigstens zwei Teilelemente aufweist, nämlich wenigstens ein erstes Teilelement (10a) sowie wenigstens ein zweites Teilelement (10b) aufweist.

7. Sicherungselement (2) nach Anspruch 6, **dadurch gekennzeichnet, dass** bei montiertem Sicherungselement (10) das jeweilige zweite, untere Teilelement (10b) als Hohlprofil ausgebildet ist und/oder wenigstens ein Halteseil (12), zumindest über wenigstens einen Teilbereich, umschließt und/oder im Wesentlichen in vertikaler Richtung verlaufend ausgerichtet ist, und wobei das jeweils erste, obere Teilelement (10a) als Seilführungsrolle (16) für wenigstens ein Halteseil (12) ausgebildet ist.

8. Sicherungselement (2) nach einem der vorherigen Ansprüche, **dadurch gekennzeichnet, dass** wenigstens ein Haltemittel (20) vorgesehen ist, welches am Sicherungselement (2), insbesondere am Halterahmen (4) und/oder an wenigstens einem Seilführungsmittel (10), angeordnet oder als integraler Bestandteil des Halterahmens oder des jeweiligen Seilführungsmittels (10) ausgebildet ist.

9. Sicherungselement (2) nach Anspruch 8, **dadurch gekennzeichnet, dass** wenigstens ein Haltemittel (20) als Klemmelement, insbesondere als Schraubklemme, ausgebildet ist, und welches Haltemittel (20) an einem Halteseil (12) anordenbar beziehungsweise befestigbar ist und/oder durch welche das Sicherungselement (2) in montiertem Zustand vertikal an wenigstens einem Halteseil (12) positionierbar beziehungsweise ausrichtbar ist.

10. Sicherungselement (2) nach einem der Ansprüche 8 oder 9, **dadurch gekennzeichnet, dass** das wenigstens eine Haltemittel (20) oberhalb oder unterhalb des jeweiligen Seilführungsmittels (10) anordenbar ist.

11. Sicherungselement (2) nach einem der vorherigen Ansprüche, **dadurch gekennzeichnet, dass** es mittels wenigstens zweier Halteseile (12) zwischen zwei Teilleitern (24), insbesondere zwei spannungsführenden Teilleitern (24), wenigstens eines Übertragungssystems einer Hochspannungsfreileitung anordenbar und/oder gegenüber wenigstens einem Fest- und/oder Ankerpunkt fixier und/oder positionierbar ist, wobei die Halteseile (12) dabei im Wesentlichen in vertikaler Richtung verlaufen beziehungsweise geführt sind und/oder verlaufen.

12. Vorrichtung zur Sicherung von Freileitungen, insbesondere von Hochspannungsfreileitungen, welche wenigstens ein Sicherungselement (2) gemäß einem der Ansprüche 1 bis 11 sowie wenigstens zwei elektrisch isolierende Halteseile (12) umfasst, wobei die wenigstens zwei Halteseile (12) zur Führung und/oder Halterung des jeweiligen Sicherungselementes (2) vorgesehen sind.

13. Vorrichtung nach Anspruch 12, **dadurch gekennzeichnet, dass** die wenigstens zwei Halteseile (12) jeweils an einem zwischen einem Teilleiter (24), insbesondere einem spannungsführenden Teilleiter, wenigstens eines Übertragungssystems einer Hochspannungsfreileitung, und wenigstens einem, insbesondere am Boden befindlichen, Fest- oder Ankerpunkt befestigbar und/oder verspannbar sind.

14. Vorrichtung nach einem der Ansprüche 12 oder 13, **dadurch gekennzeichnet, dass** das jeweilige Sicherungselement (2) und Halteseile (12) derart ausgerichtet und/oder angeordnet sind, so dass eine gelöste Freileitung auf und/oder entlang dem jeweiligen Halteseil (12) und/oder dem Seilführungsmittel (10) automatisch auf die Lauffläche der wenigstens einen Laufrolle (6) des Sicherungselementes (10) führbar ist.

15. Verfahren zur Sicherung von Freileitungen, insbesondere von Hochspannungsfreileitungen, insbesondere unter Verwendung wenigstens einer Vorrichtung gemäß einem der Ansprüche 12 bis 14, wobei wenigstens ein Sicherungselement (2) mittels wenigstens zwei als Halteseile (12) ausgebildeten, elektrisch isolierenden Seilen zwischen zwei Teilleitern (24), insbesondere zwei spannungsführenden Teilleitern wenigstens eines Übertragungssystems einer Hochspannungsfreileitung, angeordnet wird, und im Zusammenwirken mit wenigstens einem Haltemittel (20) gegenüber wenigstens einem Kreuzungsobjekt und/oder gegenüber wenigstens einem Fest- oder Ankerpunkt an wenigstens einem Halteseil fixiert und/oder positioniert wird.
